(19) Europäisches Patentamt
European Patent Office
Office européen des brevets

(11) **EP 3 348 977 B1**

(12) **EUROPEAN PATENT SPECIFICATION**

(45) Date of publication and mention
of the grant of the patent:
**27.05.2020   Bulletin 2020/22**

(51) Int Cl.:
***G01K 7/10*** *(2006.01)*        ***G01K 7/02*** *(2006.01)*

(21) Application number: **17151432.6**

(22) Date of filing: **13.01.2017**

(54) **FAILURE TOLERANT THERMOVOLTAGE ACQUISITION FOR THERMOCOUPLE APPLICATIONS**

FEHLERTOLERANTE THERMOSPANNUNGSERFASSUNG FÜR THERMOELEMENTANWENDUNGEN

ACQUISITION DE TENSION THERMOÉLECTRIQUE À TOLÉRANCE DE PANNE POUR DES APPLICATIONS DE THERMOCOUPLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**18.07.2018   Bulletin 2018/29**

(73) Proprietor: **IDT Europe GmbH**
**01109 Dresden (DE)**

(72) Inventors:
• **Riedel, Stefan**
  **01458 Ottendorf Okrilla (DE)**

• **Kauert, Reinhard**
  **01458 Medingen (DE)**

(74) Representative: **Lippert Stachow Patentanwälte Rechtsanwälte**
**Partnerschaft mbB**
**Krenkelstraße 3**
**01309 Dresden (DE)**

(56) References cited:
**EP-A1- 1 586 910        GB-A- 2 507 092**
**JP-A- S60 129 631**

**Description**

The invention discloses a method for acquisition of failure tolerant thermo-voltage in a thermocouple sensor.

The automotive industry employs thermocouple temperature transmitters to monitor temperatures on the exhaust system. A thermocouple is fabricated by joining two dissimilar metals. The junction of the two dissimilar metals produces a small voltage that is related to its temperature. This is known as Seebeck effect. The Seebeck voltage (so called thermo voltage) is measured as a difference voltage across the two thermocouple sensor wires and translated into a temperature signal by a measurement and acquisition system. This kind of temperature measurement is sensitive against two typical system fault effects that often occur in a field:

1. Thermocouple sensor degrades or changes it resistance;
2. Insulation resistance to ground potential decreases.

This system faults are detected by the measurement system whereon it usually indicates that the temperature signal is not reliable any more. Different methods for fault detection are established and are not part of this invention. So US 6,556,145 B1 describes a method how to detect a degraded thermocouple sensor that changes its resistance.

As automotive temperature measurement becomes more important for engine control there is an increasing need to provide a reliable temperature signal that is robust against the typical system faults.

US 6,556,145 B1 claims that the diagnostic signal is used to calculate a compensated temperature output signal. In terms of US 6,556,145 B1 the diagnostic signal is related to the thermocouple resistance itself but not to an insulation resistance to ground fault.

GB2507092 discloses a method and circuit for in-situ measurement of the insulation resistance to ground of a thermocouple.

Today there is no state of the art method publicized that compensates an insulation resistance to ground fault. It is therefore the object of this invention describes a method how to compensate this type of system fault to increase the reliability of the measurement system.

An insulation resistance fault can be caused by the mechanical construction of the sensor. So most thermocouple sensors have a characteristic to decrease its insulation resistance to ground especially at high temperatures what will result in a wrong temperature output. A low insulation resistance can also be caused by a faulty sensor system installation.

If the thermocouple sensor wires have an insulation resistance fault to ground the measured thermo voltage is changed that leads to a wrong temperature output. This voltage change is caused by the current flowing through the insulation resistance to ground and dropping across any ohmic resistance of the sensor network connected to the measurement system. The network resistance includes contacts, sensor wires and EMC-filter components if available.

The object of the invention will be solved by a method for acquisition of failure tolerant thermo-voltage in a thermocouple sensor comprising the following steps:

- performing four different voltage measurements by measuring at two different common mode voltage levels, each at a positive and a negative current polarity,
- resulting in four different measurement values nI, pI, nII and pII,
- calculating a compensated thermo-voltage $V_{TC\_comp}$ using nI, pI, nII and pII by a digital signal processing,

whereas the compensated thermo-voltage $V_{TC\_comp}$ is independent from a local occurrence of an insulation resistance fault along a sensor wire of the thermocouple sensor. Therefore, the failure tolerant thermos-voltage acquisition method is used to eliminate the voltage caused by insulation resistance fault from the measured differential voltage. The acquisition method is a combination of voltage measurement and digital signal processing of the measurement results, whereas the compensated thermo-voltage $V_{TC\_comp}$ is calculated as follows: $V_{TC\_comp} = 2*M1 - M2$, whereas $M1 = (nI+pI)/2$, $M2 = (nII+pII)/2$.

In order to execute the inventive method the voltage measurements are performed by a differential amplifier with a positive and a negative input and a common mode voltage buffer connected to the positive or the negative input of the differential amplifier in order to provide the two common mode voltage levels (I, II) with a positive (p) or a negative (n) current polarity, depending on whether the buffer is connected to the positive (p) or the negative (n) input of the differential amplifier.

The four voltage measurement values are measured as follows:

$$nI = V_{TC}+V_1, \hspace{4cm} (a)$$

$$pI = V_{TC} - V_2, \quad (b)$$

$$nII = V_{TC} + V_1 \text{ and} \quad (c)$$

$$pII = V_{TC} - V_2, \quad (d)$$

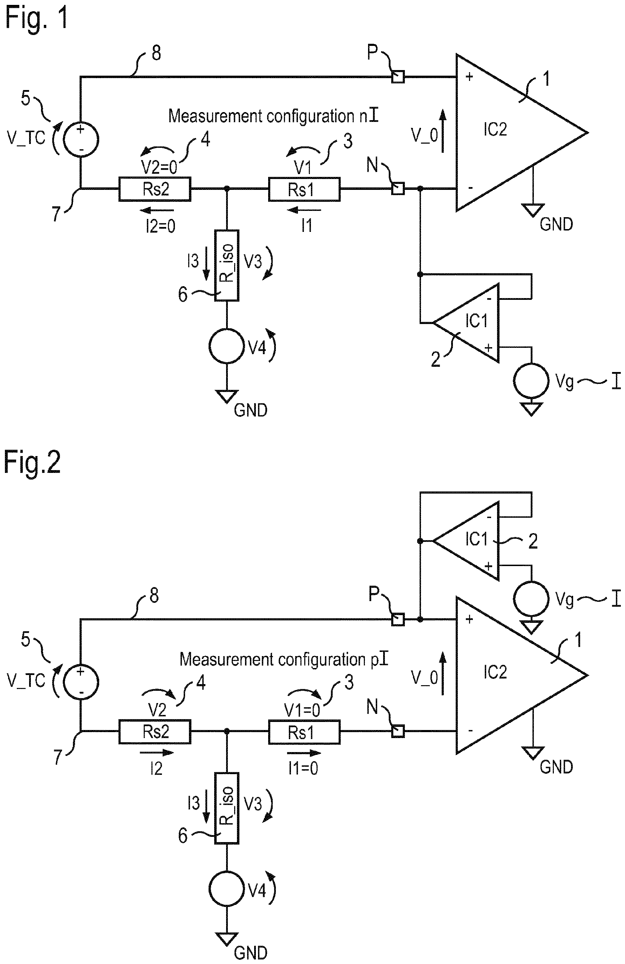

whereas nI is performed at a first common mode voltage level with a negative current polarity, nII is performed at a second common mode voltage level with a negative current polarity, pI is performed at the first common mode voltage level with a positive current polarity and pII is performed at a second common mode voltage level with the positive current polarity, whereas $V_1$ is a voltage drop over a first sensor wire network, $V_2$ is a voltage drop over a second senor wire network and $V_{TC}$ is the thermo-voltage of the thermocouple sensor. The four different voltage measurement results nI, pI, nII, pII are realized with four different single measurements which differ in common mode voltage level and current polarity. This is shown in the measurement setup of figures 1 to 4.

The required compensated thermo-voltage $V_{TC\_comp}$ is calculated as follows:

$$V_{TC\_comp} = 2*M1 - M2, \quad (eq. \ 1)$$

whereas

$$M1 = (nI + pI)/2, \quad (eq. \ 2)$$

$$M2 = (nII + pII)/2. \quad (eq. \ 3)$$

So, the intermediate calculations (eq. 2) and (eq. 3) are based on four different voltage measurement results nI, pI, nII and pII. With relation (eq. 1) the acquisition method is independent from the local occurrence of the insulation resistance fault along the sensor wires.

The intermediate calculations can also be expressed by

$$M1 = V_{TC} + V_{err} \text{ and} \quad (eq. \ 2*)$$

$$M2 = V_{TC} + 2*V_{err}, \quad (eq. \ 3*)$$

with $V_{err}$ as an error voltage caused by the insulation resistance fault. The error voltage is calculated by the measured voltages $V_1$ and $V_2$ of the voltage drop over a first sensor wire network, and the voltage drop over a second senor wire network, respectively. So

$$V_{err} = (V_1 - V_2)/2 \quad (eq. \ 4)$$

In an embodiment of the present inventive subject-matter the thermocouple in a thermocouple sensor is of type K or type N.

And to finalize the measurement set-up of the independent failure tolerant thermos-voltage acquisition the two different common mode voltage levels are at $V_g$ and $2*V_g$ provided by the common mode voltage buffer.

The invention will be explained in more detail using exemplary embodiments.

The appended drawings show

Fig. 1    Measurement configuration for determine nI;

Fig. 2    Measurement configuration for determine pI;

Fig. 3    Measurement configuration for determine nII;

Fig. 4    Measurement configuration for determine pII.

Figure 1 shows the measurement configuration for determine the amplifier input voltage nI, if the common mode voltage level is $V_g$ (as a first common mode voltage level) provided by the common mode voltage buffer and a negative current polarity, because the common mode voltage buffer 2 is connected to the negative input of the differential amplifier 1. The current $I_1$ in a first sensor network wire is different to zero, whereas $V_1$ as a voltage drop over this first sensor network wire can be measured. The current $I_2$ in a second sensor network wire is zero, so $V_2$ as a voltage drop over this second sensor network wire is also zero. Therefore, $nI = V_{TC} + V_1$. If no insulation resistance to ground potential - a fault in the thermocouple sensor - is present the differential voltage of the differential amplifier is $V_0$ and is equal to the thermos-voltage itself.

Figure 2 shows the measurement configuration for determine the amplifier input voltage pI, if the common mode voltage level is $V_g$ (as a first common mode voltage level) provided by the common mode voltage buffer and a positive current polarity, because the common mode voltage buffer is connected to the positive input of the differential amplifier. The current $I_1$ in a first sensor network wire is zero, whereas $V_1$ as a voltage drop over this first sensor network wire is also zero. The current $I_2$ in a second sensor network wire is different to zero, so $V_2$ as a voltage drop over this second sensor network wire can be measured. Therefore, $pI = V_{TC} - V_2$.

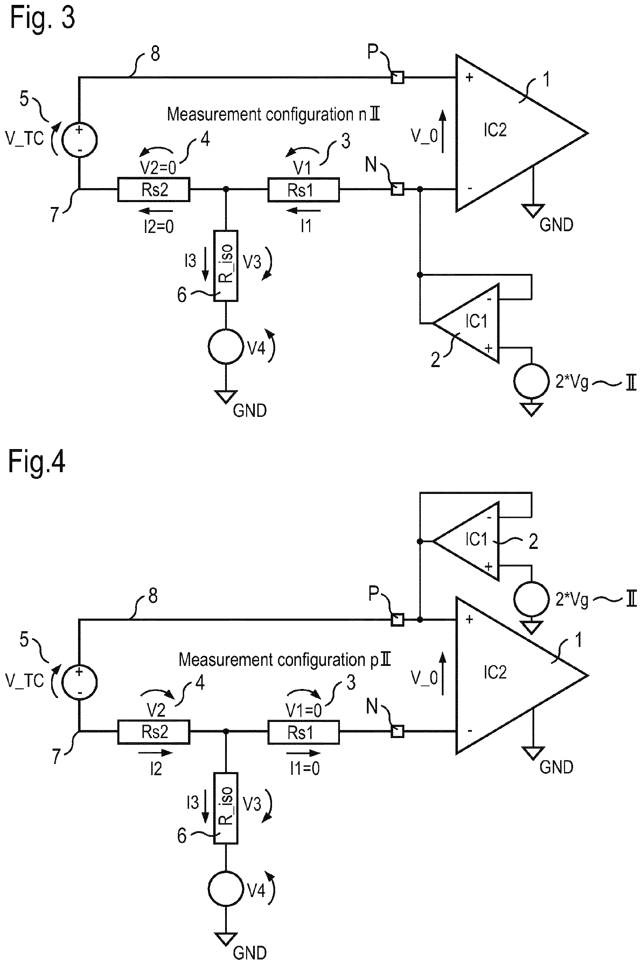

Figure 3 shows the measurement configuration for determine the amplifier input voltage nII, if the common mode voltage level is $2*V_g$ (as a second common mode voltage level) provided by the common mode voltage buffer and a negative current polarity, because the common mode voltage buffer is connected to the negative input of the differential amplifier. The current $I_1$ in a first sensor network wire is different to zero, whereas $V_1$ as a voltage drop over this first sensor network wire can be measured. The current $I_2$ in a second sensor network wire is zero, so $V_2$ as a voltage drop over this second sensor network wire is also zero. Therefore, $nII = V_{TC} + V_1$.

Figure 4 shows the measurement configuration for determine the amplifier input voltage pII, if the common mode voltage level is $2*V_g$ (as a second common mode voltage level) provided by the common mode voltage buffer and a positive current polarity, because the common mode voltage buffer is connected to the positive input of the differential amplifier. The current $I_1$ in a first sensor network wire is zero, whereas $V_1$ as a voltage drop over this first sensor network wire is also zero. The current $I_2$ in a second sensor network wire is different to zero, so $V_2$ as a voltage drop over this second sensor network wire can be measured. Therefore, $pII = V_{TC} - V_2$.

With the four measurement configurations four different amplifier input voltages are provide. With these results two intermediate calculations can be performed

$$\mathtt{M1 = (nI + pI)/2 = V_{TC} + V_{err}} \qquad \mathtt{(eq.\ 2,\ 2*)}$$

$$\mathtt{M2 = (nII + pII)/2 = V_{TC} + 2*V_{err}} \qquad \mathtt{(eq.\ 3,\ 3*)}$$

Whereas

$$\mathtt{V_{err} = (V_1 - V_2)/2} \qquad \mathtt{(eq.\ 4).}$$

The failure compensates thermos-voltage is then calculates according to

$$\mathtt{V_{TC\_comp} = 2*M1 - M2} \qquad \mathtt{(eq.\ 1).}$$

As one can easily see form the equations above, the compensated thermo-voltage $V_{TC\_comp}$ is independent from a local occurrence of an insulation resistance fault along a sensor wire of the thermocouple sensor.

The above mentioned measurements represents the following variables: $V_{err}$ is the error voltage caused by an insulation resistance 6 fault, $V_0$ is the differential voltage at the amplifier input and therefore the thermos-voltage if no fault is present, $V_{TC\_comp}$ is the compensated thermos-voltage if a fault is present, $V_1$ is the voltage drop over a first sensor wire network 3 in the present set-up configuration on the right side and $V_2$ is the voltage drop over a second sensor wire network 4 in the present set-up configuration on the left side, $V_4$ is the ground bounce voltage level and $V_g$ is the common mode voltage provided by the commom mode voltage buffer 2, $R_{s1}$ is the ohmic resistance of the sensor network 3 on the right side of the measurement configuration and $R_{s2}$ is the ohmic resistance of the sensor network 4 on the left side of the measurement configuration. $R_{iso}$ is the insulation resistance 6 to ground and GND is the ground potential.

Reference signs

1    differential amplifier
2    common mode voltage buffer
3    first sensor wire network
4    second sensor wire network
5    thermo-voltage of the thermo-couple sensor
6    insulation resistance
7    sensor wire
8    sensor wire

p    positive input of the differential amplifier
n    negative input of the differential amplifier
$V_0$    differential voltage at the amplifier equal the thermos-voltage if no fault is present
I    first common mode voltage level
II    second common mode voltage level

**Claims**

1.  Method for acquisition of failure tolerant thermo-voltage in a thermocouple sensor comprising the following steps:

- performing four different voltage measurements by measuring at two different common mode voltage levels, each at a positive and a negative current polarity,
- resulting in four different measurement values nI, pI, nII and pII,
- calculating a compensated thermo-voltage $V_{TC\_comp}$ using nI, pI, nII and pII by a digital signal processing,

**characterized in that** the compensated thermo-voltage $V_{TC\_comp}$ is independent from a local occurrence of an insulation resistance (6) fault along a sensor wire (7, 8) of the thermocouple sensor, wherein the compensated thermo-voltage $V_{TC\_comp}$ is calculated as follows: $V_{TC\_comp} = 2*M1 - M2$, whereas $M1 = (nI+pI)/2$, $M2 = (nII+pII)/2$.

2.  Method for acquisition of failure tolerant thermo-voltage according to claim 1, wherein the voltage measurements are performed by a differential amplifier (1) with a positive (p) and a negative (n) input and a common mode voltage buffer (2) connected to the positive (p) or the negative (n) input of the differential amplifier (1) in order to provide the two common mode voltage levels (I, II) with a positive (p) or a negative (n) current polarity, depending on whether the buffer (2) is connected to the positive (p) or the negative (n) input of the differential amplifier (1) .

3.  Method for acquisition of failure tolerant thermo-voltage according to one of the claims 1 or 2, wherein the four voltage measurement values are calculated as follows: $nI = V_{TC}+V_1$, $pI = V_{TC}-V_2$, $nII = V_{TC}+V_1$ and $pII = V_{TC}-V_2$, whereas nI is performed at a first common mode voltage level (I) with a negative current polarity, nII is performed at a second common mode voltage level (II) with a negative current polarity, pI is performed at the first common mode voltage level (I) with a positive current polarity and pII is performed at a second common mode voltage level (II) with the positive current polarity, whereas $V_1$ is a voltage drop over a first sensor wire network (3), $V_2$ is a voltage drop over a second senor wire network (4) and $V_{TC}$ is the thermo-voltage (5) of the thermocouple sensor.

4.  Method for acquisition of failure tolerant thermo-voltage according to claim 4, wherein $M1 = V_{TC}+V_{err}$ and $M2 = V_{TC}+2*V_{err}$, with $V_{err}$ as an error voltage caused by the insulation resistance (6) fault.

5.  Method for acquisition of failure tolerant thermo-voltage according to claim 4, wherein $V_{err} = (V1-V2)/2$.

6.  Method for acquisition of failure tolerant thermo-voltage according to claim 1, wherein the thermocouple in a thermocouple sensor is of type K or type N.

7. Method for acquisition of failure tolerant thermo-voltage according to one of the claims 1 and 2, wherein the two different common mode voltages are $V_g$ and $2*V_g$ provided by the common mode voltage buffer (2).

**Patentansprüche**

1. Verfahren zum Erhalt von fehlertoleranter Thermospannung in einem Thermoelementsensor, das die folgenden Schritte umfasst:

    - Durchführen von vier verschiedenen Spannungsmessungen durch Messen bei zwei verschiedenen Gleichtaktspannungspegeln, jeweils bei einer positiven und einer negativen Strompolarität,
    - Ergeben von vier verschiedenen Messwerten nI, pI, nII und pII,
    - Berechnen einer kompensierten Thermospannung $V_{TC\_comp}$ unter Verwendung von nI, pI, nII und pII durch digitale Signalverarbeitung,

    **dadurch gekennzeichnet, dass** die kompensierte Thermospannung $V_{TC\_comp}$ unabhängig ist von einem lokalen Auftreten eines Fehlers eines Isolationswiderstands (6) entlang eines Sensordrahts (7, 8) des Thermoelementsensors, wobei die kompensierte Thermospannung $V_{TC\_comp}$ wie folgt berechnet wird: $V_{TC\_comp}$ = 2*M1 - M2, wobei

    ```
    M1 = (nI+pI)/2, M2 = (nII+pII)/2
    ```

    gilt.

2. Verfahren zum Erhalt von fehlertoleranter Thermospannung nach Anspruch 1, wobei die Spannungsmessungen durch einen Differenzverstärker (1) mit einem positiven (p) und einem negativen (n) Eingang und einen Gleichtaktspannungspuffer (2) durchgeführt werden, der mit dem positiven (p) oder dem negativen (n) Eingang des Differenzverstärkers (1) verbunden ist, um die zwei Gleichtaktspannungspegel (I, II) mit einer positiven (p) oder einer negativen (n) Strompolarität bereitzustellen, abhängig davon, ob der Puffer (2) mit dem positiven (p) oder dem negativen (n) Eingang des Differenzverstärkers (1) verbunden ist.

3. Verfahren zum Erhalt von fehlertoleranter Thermospannung nach einem der Ansprüche 1 oder 2, wobei die vier Spannungsmesswerte wie folgt berechnet werden: nI = $V_{TC}+V_1$, pI = $V_{TC}-V_2$, nII = $V_{TC}+V_1$ und pII = $V_{TC}-V_2$, wobei nI bei einem ersten Gleichtaktspannungspegel (I) mit einer negativen Strompolarität durchgeführt wird, nII bei einem zweiten Gleichtaktspannungspegel (II) mit einer negativen Strompolarität durchgeführt wird, pI bei dem ersten Gleichtaktspannungspegel (I) mit einer positiven Strompolarität durchgeführt wird und pII bei einem zweiten Gleichtaktspannungspegel (II) mit der positiven Strompolarität durchgeführt wird, wohingegen es sich bei $V_1$ um einen Spannungsabfall über ein erstes Sensordrahtnetz (3), bei $V_2$ um einen Spannungsabfall über ein zweites Sensordrahtnetz (4) und bei $V_{TC}$ um die Thermospannung (5) des Thermoelementsensors handelt.

4. Verfahren zum Erhalt von fehlertoleranter Thermospannung nach Anspruch 4, wobei M1 = $V_{TC}+V_{err}$ und M2 = $V_{TC}+2*V_{err}$ gilt, mit $V_{err}$ als eine durch den Fehler des Isolationswiderstands (6) verursachte Fehlerspannung.

5. Verfahren zum Erhalt von fehlertoleranter Thermospannung nach Anspruch 4, wobei Verr = (V1-V2) /2 gilt.

6. Verfahren zum Erhalt von fehlertoleranter Thermospannung nach Anspruch 1, wobei das Thermoelement in einem Thermoelementsensor vom Typ K oder Typ N ist.

7. Verfahren zum Erhalt von fehlertoleranter Thermospannung nach einem der Ansprüche 1 und 2, wobei die zwei verschiedenen Gleichtaktspannungen $V_g$ und $2*V_g$ sind, bereitgestellt durch den Gleichtaktspannungspuffer (2).

**Revendications**

1. Procédé d'acquisition de tension thermoélectrique à tolérance de panne dans un capteur à thermocouple, comprenant les étapes suivantes :

    - exécution de quatre mesures de tension différentes par mesure à deux niveaux de tension de mode commun différents, chacun à une polarité de courant positive et négative,
- cela ayant pour résultat quatre valeurs de mesure différentes nI, pI, nII et pII,
- calcul d'une tension thermoélectrique compensée $V_{TC\_comp}$ en utilisant nI, pI, nII et pII par un traitement numérique du signal,

**caractérisé en ce que** la tension thermoélectrique compensée $V_{TC\_comp}$ est indépendante de l'apparition locale d'un défaut de résistance d'isolation (6) le long d'un fil de capteur (7, 8) du capteur à thermocouple, dans lequel la tension thermoélectrique compensée $V_{TC\_comp}$ est calculée comme suit : $V_{TC\_comp} = 2*M1 - M2$, où $M1 = (nI+pI)/2$, $M2 = (nII+pII)/2$.

2. Procédé d'acquisition de tension thermoélectrique à tolérance de panne selon la revendication 1, dans lequel les mesures de tension sont exécutées par un amplificateur différentiel (1) comportant une entrée positive (p) et une entrée négative (n) et un tampon de tension de mode commun (2) connecté à l'entrée positive (p) ou à l'entrée négative (n) de l'amplificateur différentiel (1) afin de fournir les deux niveaux de tension de mode commun (I, II) avec une polarité de courant positive (p) ou négative (n), selon que le tampon (2) est connecté à l'entrée positive (p) ou négative (n) de l'amplificateur différentiel (1).

3. Procédé d'acquisition de tension thermoélectrique à tolérance de panne selon l'une des revendications 1 ou 2, dans lequel les quatre valeurs de mesure de tension sont calculées comme suit : $nI = V_{TC}+V_1$ $pI = V_{TC}-V_2$, $nII = V_{TC}+V_1$ et $pII = V_{TC}-V_2$, où nI est exécuté à un premier niveau de tension de mode commun (I) avec une polarité de courant négative, nII est exécuté à un second niveau de tension de mode commun (II) avec une polarité de courant négative, pI est exécuté au premier niveau de tension de mode commun (I) avec une polarité de courant positive et pII est exécuté à un second niveau de tension de mode commun (II) avec la polarité de courant positive, où $V_1$ est une chute de tension sur un premier réseau de fils de capteur (3), $V_2$ est une chute de tension sur un second réseau de fils de capteur (4) et $V_{TC}$ est la tension thermoélectrique (5) du capteur à thermocouple.

4. Procédé d'acquisition de tension thermoélectrique à tolérance de panne selon la revendication 4, dans lequel M1 = $V_{TC}+V_{err}$ et M2 = $V_{TC}+2*V_{err}$, où $V_{err}$ est une tension d'erreur provoquée par le défaut de résistance d'isolation (6).

5. Procédé d'acquisition de tension thermoélectrique à tolérance de panne selon la revendication 4, où $V_{err} = (V1-V2)/2$.

6. Procédé d'acquisition de tension thermoélectrique à tolérance de panne selon la revendication 1, dans lequel le thermocouple présent dans un capteur à thermocouple est de type K ou de type N.

7. Procédé d'acquisition de tension thermoélectrique à tolérance de panne selon l'une des revendications 1 et 2, dans lequel les deux tensions de mode commun différentes sont les tensions $V_g$ et $2*V_g$ fournies par le tampon de tension de mode commun (2).

# Fig. 1

# Fig.2

## Fig. 3

## Fig.4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6556145 B1

- GB 2507092 A